# EUROPÄISCHE PATENTSCHRIFT

(11) **EP 4 497 485 B1**
(45) Veröffentlichungstag und Bekanntmachung des Hinweises auf die Patenterteilung: **08.04.2026**
(21) Anmeldenummer: 24191073.6
(22) Anmeldetag: 26.07.2024
(51) Int. Cl.: A63H 5/00, G09B 5/04

(54) **INTERAKTIVES SPIELZEUGSET ZUM ABSPIELEN DIGITALER MEDIEN SOWIE VERFAHREN ZUM BETREIBEN EINES SOLCHEN SPIELZEUGSETS**
INTERACTIVE TOY SET FOR PLAYING DIGITAL MEDIA AND METHOD FOR OPERATING SUCH A TOY SET
ENSEMBLE DE JOUETS INTERACTIFS POUR LA LECTURE DE MÉDIAS NUMÉRIQUES ET MÉTHODE DE FONCTIONNEMENT D'UN TEL ENSEMBLE DE JOUETS

(30) Priorität: 26.07.2023 DE 102023119880
(43) Veröffentlichungstag der Anmeldung: 29.01.2025
(73) Patentinhaber: Beuge, Andreas, 73431 Aalen (DE)
(72) Erfinder: Beuge, Andreas, 73431 Aalen (DE)
(74) Vertreter: Dalek, Arkadius Jan

(56) Entgegenhaltungen:
- EP-A1- 4 106 302
- WO-A1-2022/128128
- CN-A- 106 029 192
- DE-A1- 102020 122 032
- DE-U1- 202018 104 005
- DE-U1- 202019 105 117
- DE-U1- 202021 104 782

## Beschreibung

Die Erfindung betrifft ein interaktives Spielzeugset zum Abspielen digitaler Medien sowie ein Verfahren zum Betreiben eines solchen Spielzeugsets, im Einzelnen gemäß den Merkmalen der unabhängigen Ansprüche.

Interaktive Spielzeuge, die durch Auflegen einer Spielfigur eine entsprechende Geschichte oder Musik abspielen, sind bekannt. Sie ermöglichen zu einem gewissen Grad den Eingriff, also eine Interaktion in das Spiel.

Diese Spielzeuge können auch besonders gut bei der musikalischen Früherziehung zum Einsatz kommen. Dabei werden Kindern spielerisch die Zusammenhänge von Musik, wie Takt, Rhythmus sowie der Einsatz unterschiedlicher Musikinstrumente beigebracht.

Nachteilig an den bisherigen interaktiven Spielzeugen ist jedoch, dass die einzelnen Instrumente für gewöhnlich von Kindern nicht wirklich voneinander unterscheidbar wahrnehmbar sind. Auch gibt es bisher keine Möglichkeit die einzelnen Spuren einer solchen Audiodatei für Kinder ohne den Einsatz eines Bildschirms oder einer umständlichen Bedienung begreifbar und erfahrbar zu machen.

Die vorliegende Erfindung betrifft derartige Gegenstände.

DE 20 2018 104 005 U1 beschreibt ein System für gesteuerten Zugriff auf digitale Medieninhalte, das aus einem Server-Computer, einer Computernetz-Verbindung, einem Lese-/Ausgabegerät und einem Informationsträger besteht. Der Server hält digitale Inhalte bereit, das Lese-/Ausgabegerät ist mit dem Server verbunden und kann Informationen vom Informationsträger lesen und an den Server übermitteln. Basierend auf einer Überprüfung dieser Informationen gibt der Server bestimmte Medieninhalte zur Übertragung an das Lese-/Ausgabegerät frei.

DE 20 2021 104 782 U1 offenbart in Wiedergabesystem für digitale Medieninhalte, umfassend ein Wiedergabegerät mit Lese-/Ausgabegerät, einen Identifikationsträger, ein Verwaltungsgerät und einen Datenserver. Das Lese-/Ausgabegerät und das Verwaltungsgerät sind jeweils über Computernetz-Verbindungen mit dem Datenserver verbunden. Das Lese-/Ausgabegerät liest Informationen vom Identifikationsträger und übermittelt sie an den Datenserver, der darauf basierend Medieninhalte freigibt. Das Verwaltungsgerät liest oder erhält Eingaben und übermittelt diese an den Datenserver, der daraufhin Inhalte dem Identifikationsträger zuordnet.

In EP 4106302 A1 wird ein Kindertelefon gezeigt, das einen Lautsprecher und ein Mikrofon besitzt sowie mit einer Steuer- und Kommunikationseinrichtung für die Anbindung an ein externes Netzwerk ausgestattet ist. Es hat eine Einrichtung zur Gesprächspartnerwahl, die einen Aufnahmebereich zur Platzierung einer Gesprächspartner-Figur oder eines Gesprächspartner-Tokens umfasst. Diese sind mit einem maschinell auslesbaren Kennzeichen versehen, das einem Gesprächspartner eindeutig zugeordnet ist. Der Aufnahmebereich enthält eine Leseeinrichtung, die das Kennzeichen ausliest, sodass die Steuer- und Kommunikationseinrichtung eine Sprachverbindung über das externe Netzwerk aufbauen kann.

DE 20 2019 105 117 U1 zeigt eine Wiedergabevorrichtung für digitale Medien, umfassend eine Speichereinheit zum Speichern von Medien und Verknüpfungen, eine Kommunikationseinheit zur Verbindung mit einem externen Datenserver, eine Wiedergabeeinheit zum Abspielen der gespeicherten Medien, eine Sensoreinheit zum Erkennen physikalischer Veränderungen und Codes sowie eine Bedieneinheit zur Steuerung durch den Benutzer. Die Steuereinheit, die alle anderen Einheiten ansteuert, erkennt physikalische Veränderungen und Codes, fordert eine Bedieneingabe an, baut eine Verbindung zum Datenserver auf, lädt Medien herunter und spielt sie ab.

DE 10 2020 122 032 A1 betrifft ein Bedienungshilfeverfahren für Kommunikationsanwendungen. Es umfasst ein Bedienungshilfsgerät mit Basiseinheit, Datenschnittstelle für Audiodaten, Sensoreinheit, Gehäuse mit Positionierungshilfe und Kontrolleinheit. Diese steuert die Datenschnittstelle an, wenn der Sensor eine bekannte Individualkennung erkennt. Impulsgeber erleichtern die Positionierung und kennzeichnen Aufgaben. Das Verfahren beinhaltet das Empfangen und Abspeichern von Konfigurationsdaten, Identifizieren von Individualkennungen und das Auslösen sowie Übertragen von Audiodateien. Die Erfindung umfasst auch das entsprechende Gerät.

Die Aufgabe der vorliegenden Erfindung ist es ein interaktives Spielzeugset zum Abspielen digitaler Medien sowie ein Verfahren zum Betreiben eines solchen Spielzeugsets anzugeben, die gegenüber dem Stand der Technik verbessert sind. Insbesondere sollen für den Benutzer ohne den Einsatz eines Bildschirms, wie eines Monitors oder eines Smartphones einzelne Instrumente und deren Zusammenspiel im Ensemble noch besser begreifbar gemacht werden.

Die Aufgabe wird durch ein interaktives Spielzeugset zum Abspielen digitaler Medien sowie ein Verfahren zum Betreiben eines solchen Spielzeugsets nach den unabhängigen Ansprüchen gelöst. Die abhängigen Ansprüche beschreiben dabei besonders zweckmäßige Ausführungsformen der Erfindung.

Ein erfindungsgemäßes interaktives Spielzeugset zum Abspielen digitaler Medien, insbesondere zur Wiedergabe einer Audiodatei mit Musik oder einer gesprochenen Geschichte, umfasst eine Haupteinheit und wenigstens eine, bevorzugt mehrere Satelliteneinheiten, wobei die Haupteinheit und die wenigstens eine Satelliteneinheit jeweils eine Kommunikationseinheit umfassen, um miteinander in Kommunikationsverbindung zu stehen, wobei zumindest die wenigstens eine Satelliteneinheit, und bevorzugt auch die Haupteinheit folgendes umfasst:
a) ein Gehäuse, das zur Aufnahme einer oder mehrerer platzierbarer Spielmarken geeignet ist, welche jeweils einen eindeutigen Identifikator enthalten;
b) eine Erfassungseinheit innerhalb des Gehäuses oder am Gehäuse, insbesondere zum drahtlosen Erkennen des Vorhandenseins der einen oder mehreren platzierbaren Spielmarken;
c) wobei die Erfassungseinheit im Falle der wenigstens einen Satelliteneinheit über die Kommunikationseinheit in Verbindung mit einer Steuereinheit der Haupteinheit steht, und im Falle der Haupteinheit die Erfassungseinheit mit der Steuereinheit der Haupteinheit in Verbindung steht, um jeweils den mittels der Erfassungseinheit auslesbaren, eindeutigen Identifikator der Spielmarke an die Steuereinheit der Haupteinheit zu übermitteln;
wobei die Steuereinheit der Haupteinheit derart eingerichtet ist, dass auf der Grundlage der Erfassung der einen oder mehreren auf (die Haupteinheit oder) die wenigstens eine Satelliteneinheit platzierten Spielmarken eine Spur aus einer Anzahl indizierter Spuren des digitalen Mediums, wie der Audiodatei auswählbar ist, wobei die Spur auf der Grundlage einer spezifischen, eindeutigen Rolle (Charakter, Instrument, Funktion) ausgewählt werden, die jeder platzierbaren Spielmarke zugeordnet ist; und
zumindest die Haupteinheit, bevorzugt zumindest die wenigstens eine Satelliteneinheit eine Ausgabeeinheit, wie einen Lautsprecher zur Ausgabe des digitalen Mediums, wie der Audiodatei und insbesondere der ausgewählten Spur aufweist.

Mittels der Erfindung ist es rein durch das Platzieren und Wegnehmen der Spielmarken möglich, das interaktive Spielzeugset zu steuern. So kann z.B. bei Musik als digitales Medium (Audiodatei) einer Spielmarke - genauer gesagt, deren Identifikator - ein Instrument, wie eine Geige und einer anderen Spielmarke ein Klavier zugeordnet sein. Durch Auflegen, also Platzieren der Spielmarke, die für die Geige steht auf die eine Satellitenstation wird nun die Tonspur des Musikstücks (Audiodatei) - sofern vorhanden - für die Geige über die Ausgabeeinheit ausgegeben. Wird eine weitere Spielmarke, die für das Klavier steht, auf eine weitere Satelliteneinheit aufgelegt, so wird zeitlich synchron die Tonspur des Musikstücks für das Klavier abgespielt, sodass nun die zwei Stimmen oder Instrumente gemeinsam als Ensemble abgespielt werden. Beim Wegnehmen einer der Spielmarken verstummt die entsprechende Tonspur, beim Platzieren wird diese wiederum abgespielt. So können mittels des interaktiven Spielzeugsets tatsächlich die Tonspuren oder Instrumente getrennt voneinander durch den Benutzer angehört werden, ohne, dass es eines Bildschirms oder sonstiger Bedieneinrichtungen braucht. Damit können besonders auch junge Benutzer, wie Kinder im Alter von zwei Jahren und aufwärts dieses Spielzeugset intuitiv bedienen. So kann Musik in Einzelteile zerlegbar und für Kinder erfahrbar gemacht werden. Das erfindungsgemäße Spielzeugset kann auch als pädagogische Unterstützung für junge Bands oder Einzelmusiker und Schulklassen dienen. Anstelle von Musik können auch gesprochene interaktive Geschichten, Rätsel oder Ratespiele damit realisiert werden. Rätsel und Ratespiele können dadurch ermöglicht werden, dass jeder Spielemarke, insbesondere deren Identifikator eine vorbestimmte Spur der Audiodatei zugeordnet wird. Das Spielzeugset kann nun im Rätsel oder Ratespiel, bei dem es z.B. gilt ein Instrument oder eine Rolle (Charakter) zu erraten, dieses Instrument oder Rolle als Spur abspielen und erwartet das Auflegen der entsprechenden, dem Instrument oder der Rolle zugeordneten Spielmarke mit dessen Identifikator. Wird die richtige Spielmarke aufgelegt, so kann die LED der Erfassungseinheit z.B. grün aufleuchten. Wir eine falsche, also nicht der abgespielten Spur zugeordnete Spielmarke aufgelegt, so leuchtet die LED z.B. rot. Anstelle oder zusätzlich zu der LED kann ein Quittierton oder ein sonstiges Quittiersignal (optisch, haptisch) von der Ausgabeeinheit ausgegeben werden.

Ein Identifikator der Spielmarke ist eine eindeutige Kennzeichnung, wie dessen Seriennummer (UID).

Das digitale Medium kann eine Audiodatei mit Musik oder einer gesprochenen Geschichte sein. Sie kann einzelne, voneinander getrennte Spuren, auch Tonspuren genannt, enthalten, die wiederum zeitlich synchron unterteilt sind. Die Spur oder kann auf der Grundlage einer spezifischen, eindeutigen Rolle, d.h. eines in der Geschichte vorkommenden Charakter, wie des Titelhelden oder der Nebendarsteller oder eines Instruments, wie einer Gitarre, eines Basses oder Schlagzeuges ausgewählt werden, die jeder platzierbaren Spielmarke zugeordnet ist. Auch kann die Audiodatei, besonders bei Geschichten in Kapiteln unterteilt sein. Auch können die Spuren selbst in unterschiedlichen Audiodateien gespeichert sein. So kann z.B. die Geige als separate Spur dienen und auch als separate Audiodatei gespeichert sein und die Gitarre wiederum ebenfalls als separate Spur und Audiodatei gespeichert sein. Gleiches gilt für unterschiedliche Rollen oder Charaktere in der Geschichte. Auch diese können in unterschiedlichen Spuren oder Audiodateien im Speicher abgelegt sein. Das Spielzeugset kann die Mehrzahl von Audiodateien oder Spuren auch gleichzeitig wiedergeben, also mixen. Auch ist eine Synchronisation mit einer Cloud möglich. Grundsätzlich kann das digitale Medium auf dem Spielzeugset oder über die Cloud erstellt werden. Dazu kann die Steuereinheit entsprechend als Computer eingerichtet sein.

Im Sinne der Erfindung ist eine Cloud ein Netzwerk von Servern, die über das Internet zugänglich sind und verschiedene Dienste bereitstellen, wie Datenspeicherung, Rechenleistung und Softwareanwendungen. Anstatt Programme und Dateien auf einem lokalen Computer (hier dem Spielzeugset) oder Server zu speichern, können sie in der Cloud gespeichert und von überall aus über das Internet abgerufen werden. Ein Zugang zum Internet ist erforderlich, um auf die Cloud-Dienste zuzugreifen. Über APIs (Application Programming Interfaces) kann das Spielzeugset dann auf bestimmte Funktionen und Daten der Cloud-Dienste zugreifen. APIs ermöglichen es, verschiedene Softwareanwendungen miteinander zu verbinden und Daten oder Dienste der Cloud nahtlos zu integrieren.

Das interaktive Spielzeugset kann die Haupteinheit, die wenigstens eine Satelliteneinheit und eine oder mehrere, auf die Haupteinheit oder die Satelliteneinheiten platzierbarer Spielmarken umfassen.

Zum Herunterladen von digitalen Medien, wie Audiodateien, insbesondere Musikstücken oder gesprochenen Geschichten umfasst die Haupteinheit eine Schnittstelle zum insbesondere drahtlosen Verbinden des Spielzeugsets mit einem externen Computergerät, das einen externen Speicher für digitaler Medien enthält, wobei die Schnittstelle mit der Steuereinrichtung oder der Kommunikationseinrichtung der Haupteinheit in Verbindung steht. Die Schnittstelle kann beispielsweise eine LAN-, WLAN- oder Bluetooth-Schnittstelle sein. Das externe Computergerät kann ein PC oder aber auch ein mobiles Gerät, wie Smartphone oder Tablet mit Zugang zum Internet sein. Das externe Computergerät kann eine Cloud sein.

Die Steuereinheit kann einen Speicher für das digitale Medium umfassen, wobei der Speicher mit dem externen Speicher in Verbindung bringbar ist, um digitale Medien vom externen Speicher auf den Speicher zu laden, wobei bevorzugt in dem Speicher Daten hinterlegt oder hinterlegbar sind, aufgrund derer die Steuereinheit die Ausgabeeinheit zur Wiedergabe der Musik oder einer gesprochenen Geschichten ansteuern kann, wobei in dem Speicher Daten verschiedener Musik oder verschiedener gesprochener Geschichten abgelegt oder ablegbar sind, wobei bevorzugt die Steuereinheit (8) derart eingerichtet ist, dass sie aus den digitalen Medien in ihrem Speicher oder vom externen Speicher neue digitale Medien, wie Audiodateien während des Betriebs des Spielzeugsets, insbesondere beim Platzieren der einen oder mehreren Spielmarken (6) auf die wenigstens eine Satelliteneinheit, insbesondere durch Mischen der Spuren von vorhandenen und/oder von generierten digitalen Medien nach Art eines Sequenzers nach Art eines Sequenzers generiert (zusammengemischt). So können stets neue digitale Medien z.B. von dem externen Speicher mittels des externen Computergeräts für den Einsatz in dem interaktiven Spielzeugset in dessen Speicher heruntergeladen werden. Die im Speicher hinterlegten, also gespeicherten Daten, wie die digitalen Medien können auch dynamisch zur Laufzeit des interaktiven Spielzeugsets erzeugt und dann in den Speicher abgelegt worden sein. Dabei kann, wenn das digitale Medium mehrere Spuren aufweist, die den Rollen unterschiedlicher Spielmarken in einer vorbestimmten oder generierten Reihenfolge entsprechen, die Wiedergabe des digitalen Mediums nach dem Ende der Wiedergabe einer bestimmten Spur und/oder die Generierung einer Spur gestoppt werden, wohingegen die weitere Wiedergabe des digitalen Mediums ab dieser Stelle erst fortgesetzt wird, sobald eine Spielmarke auf die Erfassungseinheit aufgelegt wird, die der Rolle der auf diese eben wiedergegebene Spur folgende Spur entspricht. Prinzipiell wäre es so möglich, z.B. eine generierte Geschichte, die anhand der nacheinander aufgelegten unterschiedlichen Spielmarken, wie aufgelegten Instrumente on the fly ihre Story oder ihren Plot, also ihre Entwicklung ändert. Ein Beispiel: es wurde eben die Spielkarte aufgelegt, die die Rolle des Wolfes hatte, sodass die Spur des digitalen Mediums abgespielt wurde, die dem Wolf entsprach. Z.B. spricht der Wolf in der Geschichte. Ist die Spur zu Ende wiedergegeben, so bleibt die Wiedergabe am Ende dieser Spur stehen. Wird nun eine weitere Spielmarke aufgelegt, die beispielsweise dem Rotkäppchen entspricht, so wird die Geschichte mit der auf diese Spur folgenden Spur des Rotkäppchens wiedergegeben.

Wenn etwas im Speicher "hinterlegt" oder "abgelegt" ist, dann ist damit gemeint, dass zum Zeitpunkt des Einschaltens des Spielzeugsets die digitalen Medien bereits auf dem Speicher vorhanden sind. Hingegen wird unter den Begriffen "hinterlegbar" oder "ablegbar" verstanden, dass die Daten während der Laufzeit des Spielesets z.B. on-the-fly von einem externen Computer, wie der Cloud erstellt oder heruntergeladen oder von der Steuereinheit im Zeitpunkt des Betriebs generiert werden und dann auf den Speicher geschrieben werden. Grundsätzlich ist dann auch eine Kombination möglich. So kann die Ausgabe eins Hybriden aus vorhandenen Spuren und dynamisch generierten möglich sein.

Im Fall von interaktiven Geschichten soll der Geschichtsverlauf angehalten werden können, um auf eine bestimmte Spielmarke zu warten und dann erst soll die Geschichte weitergehen, sodass die Wiedergabe der entsprechenden Spur gestoppt wird. So kann die Geschichte weitergehen, wenn eine entsprechende Spielmarke, die z.B. du das passende Instrument ist, auf die Erfassungseinheit aufgesetzt wird.

Wenn von "generieren", insbesondere in Bezug auf die Generierung von digitalen Medien die Rede ist, dann kann diese Erzeugung mittels generativer Künstlicher Intelligenz (KI) erfolgen.

So kann eine entsprechende Spur, auch on the fly, mittels der Steuereinheit oder des Cloud-Dienstes erstellt werden, z.B. durch Anbindung an die generative KI, zu der entsprechenden Rolle der Spielmarke passenden Text erzeugt, welcher dann über die Cloud oder die Steuereinheit in Sprache übersetzt wird (Text-to-Speech), um daraus die entsprechende Spur zu generieren.

Grundsätzlich ist es möglich, dass dem digitalen Medium Metadaten zugeordnet sind oder zuordenbar sind, die die Eigenschaft der einzelnen Spuren näher bezeichnen. So könnte zum Beispiel einer Spur, die eine Audiodatei einer Gitarre aufweist, Hintergrundinformationen zu dem Instrument oder dem abgespielten Interpreten zugeordnet sein. Bevorzugt können diese Metadaten in Form einer weiteren Spur des digitalen Mediums sein. Diese Spur kann auch über eine API oder eine Cloud erzeugt und dann in dem Speicher oder dem externen Speicher der Steuereinheit abgelegt oder ablegbar sein. Zum Abspielen, also Wiedergeben der Metadaten in Form der zusätzlichen Spur, kann eine eine bestimmte Rolle aufweisenden Spielmarke verwendet werden.

Im Sinne der Erfindung wird unter einem Sequenzer - in der Musik - ein elektronisches Gerät oder eine Software, die musikalische Noten und andere musikalische Informationen aufzeichnet und abspielt, verstanden. Mit einem Sequenzer kann man Musikstücke erstellen, indem man verschiedene Töne, Rhythmen und Instrumente in einer bestimmten Reihenfolge anordnet. Er hilft dabei, Melodien, Beats und Harmonien zu programmieren und abzuspielen, oft in Verbindung mit Synthesizern und anderen elektronischen Instrumenten. Kurz gesagt, ein Sequenzer ist ein Werkzeug, mit dem man Musik komponieren und arrangieren kann. Die Steuereinheit kann also derart ausgeführt sein, dass sie einen solchen Sequenzer nachbildet. Dabei kann die Steuereinheit derart eingerichtet sein, dass sie die digitalen Medien selbst oder mithilfe der Verbindung zur Cloud während des Betriebs des Spielzeugsets selbst generiert, also mittels des Sequenzers ein eigenes digitales Medium mit einer Mehrzahl von Spuren generiert. Der Sequenzer muss dabei keine eigenen Tonspuren aufzeichnen.

Dabei kann die Steuereinheit derart ausgebildet sein, dass sie die Ausgabe einer Spur einleitet, wenn die Erfassungseinheit insbesondere der wenigstens einen Satelliteneinheit das Vorhandensein der einen oder mehreren platzierbaren Spielmarken feststellt, und die Ausgabe unterbricht, wenn die Erfassungseinheit eine Änderung des Vorhandenseins, wie das Fehlen der einen oder mehreren platzierbaren Spielmarken infolge deren Wegnehmens von der Erfassungseinheit feststellt. Auf diese Weise können z.B. die einzelnen Tonspuren einer Audiodatei, wie eines Musikstücks getrennt über die Ausgabeeinheit ausgegeben werden. In diesem Betriebsmodus werden die Spuren in Abhängigkeit der aufgelegten Spielmarke (deren Identifikator) über die Ausgabeeinheit ausgegeben.

Die Steuereinheit kann einen oder mehrere Prozessoren, wie CPUs aufweisen, die mit dem Speicher und/oder einem externen Speicher, der der Speichereinheit zugeordnet ist, zusammenarbeiten. Die Steuereinheit kann auch einen entsprechenden Arbeitsspeicher umfassen. Damit kann die Steuereinheit selbst als Computer aufgefasst werden. Sie kann Zugriff auf das Internet und dort bevorzugt - wie bereits ausgeführt - über API-Schnittstellen Zugriff auf andere Computer oder Applikationen haben.

Mit Vorteil können die Spielmarken als Bedienelemente vorgesehen sein, um bei der Wiedergabe des digitalen Mediums, einer Musik oder einer gesprochenen Geschichte aufgrund von Daten eines Datensatzes mit getrennt auslesbaren Datenfolgen von einem ersten Kapitel zu einem nächsten Kapitel zu springen. Das bedeutet, dass die Steuerung des interaktiven Spielzeugsets deutlich vereinfacht wird und ohne Bildschirm oder sonstige weiteren Tasten auskommt.

Die Kommunikationseinheit kann zur wechselseitigen, bevorzugt drahtlosen Kommunikation der wenigstens einen Satelliteneinheit mit der Haupteinheit eingerichtet sein. Eine solche drahtlose Kommunikation kann mittels Funktechnik, wie einer Funkverbindung, z.B. WLAN oder Bluetooth realisiert werden. Die Kommunikation zwischen den Satelliteneinheiten und der Haupteinheit kann mittels des HTTP-Protokolls erfolgen. Die einzelnen Spuren können dann als Stream übertragen werden. Auf der Haupteinheit können Streams dynamisch erzeugt und entweder direkt an der Audioschnittstelle der Haupteinheit ausgegeben, oder per WLAN zur Verfügung gestellt werden.

Sowohl die Haupt- als auch die wenigstens eine Satelliteneinheit kann in ihrem Gehäuse eine Batterie umfassen, um die Erfassungseinheit, die Steuereinheit, die Kommunikationseinheit und die Ausgabeeinheit mit Spannung zu versorgen. Alternativ sind die Haupt- als auch die wenigstens eine Satelliteneinheit an eine Spannungsquelle anschließbar.

Die Erfassungseinheit kann einen Sensor umfassen, wobei der Sensor ein passiver RFID-Transponder oder ein aktiver RFID-Transponder ist. Entsprechend kann die wenigstens eine Spielmarke ein passiver RFID-Transponder oder ein aktiver RFID-Transponder sein. So können die Spielmarken alle möglichen Formen umfassen, z.B. Miniaturen von Instrumenten oder Charakteren der vorzulesenden Geschichte und darin - z.B. durch Eingießen - einen solchen RFID-Transponder umfassen. Grundsätzlich können aber auch andere Sensoren zum Einsatz kommen. Die Erfassungseinheit kann wenigstens eine Anzeige, wie eine LED umfassen, um das Platzieren und Wegnehmen der wenigstens einen Spielmarke zu visualisieren.

Die Ausgabeeinheit kann mit der Speichereinheit in Kommunikationsverbindung stehen, sodass Daten durch Ansteuerung beider über die Steuereinheit z.B. als akustische Signale ausgegeben werden können. So kann die Ausgabeeinheit auch einen Quittierton oder ein sonstiges Quittiersignal (z.B. optisch, haptisch oder Kombinationen davon) wiedergeben, sobald die wenigstens eine Spielmarke auf die Erfassungseinheit aufgelegt oder von dieser weggenommen wird.

Ferner kann die Steuereinheit derart ausgebildet sein, dass sie die Art der Ausgabe, wie die Tonlage, die Tonart, den Rhythmus oder den Takt einer Spur - während des Betriebs des Spielzeugsets - ändert, wenn die Erfassungseinheit das Vorhandensein der einen oder mehreren platzierbaren Spielmarken feststellt, und zwar bevorzugt in Abhängigkeit einer spezifischen, eindeutigen Rolle ausgewählt wird, die jeder platzierbaren Spielmarke zugeordnet ist. So kann beispielsweise ausgehend von der für die Spur abgespeicherten Tonlage, Tonart, Rhythmus, Tempo oder Takt, diese interaktiv abgeändert werden und die Spur mit einer entsprechend davon geänderten Tonlage, Tonart, Rhythmus oder Takt angespielt werden. Dazu kann es dann unterschiedliche separate Spielmarken geben, wobei es für die Erhöhung oder Erniedrigung der Tonlage, der Tonart, des Rhythmus oder des Takts jeweils eine separate Spielmarke gibt. Man könnte auch sagen, dass diese Spielkarten entsprechend eindeutige Rolle aufweisen, die jeder Spielmarke zugeordnet sind, wie z.B. die Tonlage in Dur oder Moll zu ändern. Durch Auflegen der entsprechenden Spielmarke auf eine Erfassungseinheit wird dann die entsprechende Eigenschaft der Spur geändert. Wird z.B. eine Spielmarke, die das Tempo erhöhen auf die Erfassungseinheit gesetzt, so erhöht sich das Abspieltempo der Spur bzw. des gesamten digitalen Mediums, das abgespielt wird, beispielhaft um 3 bpm (Beats per Minute). Je öfter die Spielmarke in Folge auf die Erfassungseinheit aufgelegt wird, desto schneller wird das Tempo. Dabei kann das Tempo z.B. in der Ausgangssituation bei 96 bpm starten.

Die Erfindung betrifft auch ein Verfahren zum Betreiben eines interaktiven Spielzeugsets zum Abspielen digitaler Medien, insbesondere zur Wiedergabe einer Audiodatei mit Musik oder einer gesprochenen Geschichte, insbesondere zum Betreiben eines erfindungsgemäßen interaktiven Spielzeugsets, wobei das Spielzeugset eine Haupteinheit und wenigstens eine Satelliteneinheit umfasst, die in Kommunikationsverbindung miteinander stehen, wobei das Verfahren die folgenden Schritte umfasst:
a) Erkennen des Vorhandenseins eines oder mehrerer auf der wenigstens einen Satelliteneinheit platzierbarer Spielmarken, wobei jeder Spielmarke eine Spur aus einer Anzahl indizierter Spuren des digitalen Mediums, wie der Audiodatei zugeordnet ist;
b) Auswählen einer bestimmten Spur auf der Grundlage eines eindeutigen Identifikators der platzierbaren Spielmarke;
c) Wiedergeben der dem eindeutigen Identifikator zugeordneten Spur mittels einer Ausgabeeinheit (9) der Haupteinheit (2), wobei bevorzugt bei Übereinstimmung der Spielemarke mit der diesem zugeordneten Spur die Ausgabeeinheit (9) ein oder ein sonstiges Quittiersignal (z.B. optisch, haptisch oder Kombinationen davon) ausgibt. Die Erfindung betrifft auch ein weiteres Verfahren zum Betreiben eines interaktiven Spielzeugsets zum Abspielen digitaler Medien, insbesondere zur Wiedergabe einer Audiodatei mit Musik oder einer gesprochenen Geschichte, wobei das digitale Medium eine Anzahl von Spuren aufweist, insbesondere zum Betreiben eines erfindungsgemäßen interaktiven Spielzeugsets, wobei das Spielzeugset eine Haupteinheit und wenigstens eine Satelliteneinheit umfasst, die in Kommunikationsverbindung miteinander stehen, wobei das Verfahren die folgenden Schritte umfasst:
   a) Wiedergeben mehrerer Spuren des digitalen Mediums zugleich;
   b) Erkennen des Vorhandenseins eines oder mehrerer auf der wenigstens einen Satelliteneinheit platzierbarer Spielmarken, wobei jeder Spielmarke ein eindeutiger Identifikator zugeordnet ist, wobei jeder Spielmarke eine Spur aus der Anzahl von Spuren des digitalen Mediums, wie der Audiodatei zugeordnet ist;
   c) Stoppen der Wiedergabe einer bestimmten Spur bei Übereinstimmung der erkannten Spielmarke mit der dieser zugeordneten Spur, sobald der eindeutige Identifikator der platzierbaren Spielmarke erkannt wurde.

Das Wiedergeben im Schritt a) kann insbesondere mittels der Ausgabeeinrichtung des Spielzeugsets erfolgen.

Mit den erfindungsgemäßen Verfahren können also auch die bereits genannten Rätsel und Ratespiele mit dem Spielzeugset gespielt werden. So können im Schritt a) alle Spuren auf einmal mittels des Ausgabeeinrichtung wiedergegeben werden und durch Auflegen einer Spielmarke wird die dieser Spielmarke zugeordneten Spur in der Wiedergabe gestoppt. Durch das Stoppen der Wiedergabe oder Stummschalten der Spur wird angezeigt, dass z.B. das entsprechende, der Spielmarke zugeordnete Instrument richtig geraten wurde.

Gemäß einer Ausführungsform kann die Art der Ausgabe, wie die Tonlage, die Tonart, den Rhythmus oder den Takt beim Wiedergeben der dem eindeutigen Identifikator zugeordneten Spur geändert werden, wenn das Vorhandensein der einen oder mehreren platzierbaren Spielmarken festgestellt wird, und zwar bevorzugt in Abhängigkeit einer spezifischen, eindeutigen Rolle, die der platzierbaren Spielmarke zugeordnet ist. So kann eine Spielmarke die Rolle aufweisen, die Tonlage der gewählten oder aller gewählten Spuren des digitalen Mediums, das abgespielt werden soll, zu erniedrigen.

Weiterhin können aus den digitalen Medien neue digitale Medien, wie Audiodateien während des Betriebs des Spielzeugsets, insbesondere beim Platzieren der einen oder mehreren Spielmarken auf die wenigstens eine Satelliteneinheit, insbesondere durch Mischen der Spuren von vorhandenen digitalen Medien nach Art eines Sequenzers generiert werden, wobei bevorzugt das Mischen vorhandener und/oder dynamisch erzeugter Spuren nach dem Zufallsprinzip erfolgt, wenn das Vorhandensein der einen oder mehreren platzierbaren Spielmarken, insbesondere einer die Rolle des Zufallsgenerators des Sequenzers aufweisenden Spielmarke festgestellt wird.

Vorteilhaft kann das Generieren der Spuren nach dem Zufallsprinzip erfolgen, wenn das Vorhandensein der einen oder mehreren platzierbaren Spielmarken, insbesondere einer die Rolle des Zufallsgenerators des Sequenzers aufweisenden Spielmarke festgestellt wird. So kann durch Auflegen der "Zufallsgenerator"-Spielmarke der Sequenzer angesprochen werden, welcher dann eine neue Kombination an verfügbaren, also im (externen) Speicher abgelegten oder dynamisch erzeugten Spuren zu einem neunen digitalen Medium mischen kann.

Die Erfindung betrifft auch die Verwendung eines erfindungsgemäßen interaktiven Spielzeugsets 10 als Sequenzer, wobei bevorzugt das interaktive Spielzeugset derart eingerichtet ist, dass es ein erfindungsgemäßes Verfahren ausführt. Die Vorteile der Erfindung sollen nun anhand eines bevorzugten Ausführungsbeispiels und der Figur näher dargestellt werden.

Es zeigt:

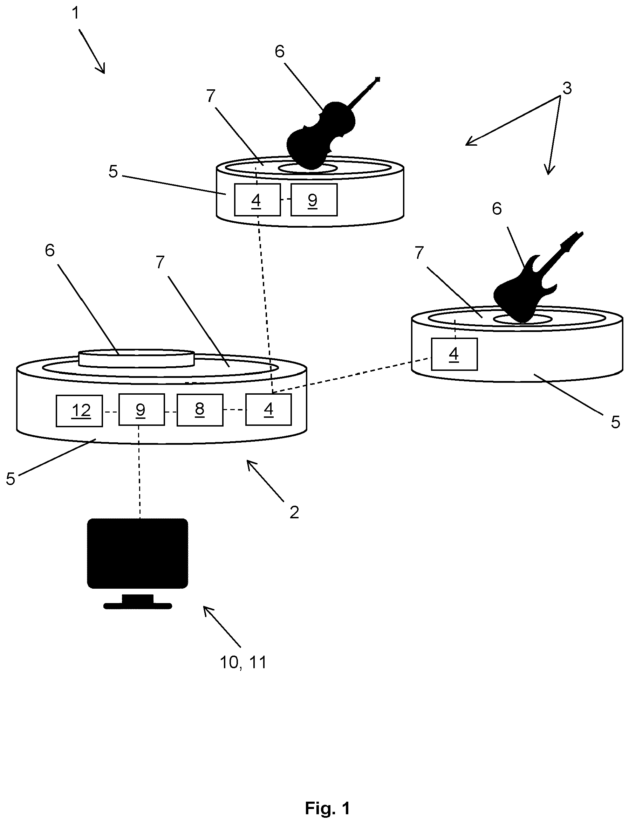

- Fig. 1: eine schematische Darstellung eines interaktiven Spielzeugsetz gemäß einer Ausführungsform.

In Fig. 1 ist in einer schematischen Darstellung ein interaktives Spielzeugset 1 gezeigt. Es umfasst eine Haupteinheit 2 und mehrere, hier lediglich zwei Satelliteneinheiten 3. Wie mit den gestrichelten Linien angedeutet, stehen die Haupteinheit 2 und Satelliteneinheiten 3 jeweils über eine Kommunikationseinheit 4 miteinander in Kommunikationsverbindung, hier drahtlos.

Sowohl die Satelliteneinheiten 3 als auch die Haupteinheit 2 umfassen ein Gehäuse 5, das zur Aufnahme einer oder mehrerer platzierbarer Spielmarken 6 geeignet ist. Die Spielmarken 6 enthalten jeweils einen eindeutigen Identifikator. Sie können, wie hier dargestellt, z.B. als Miniaturen von Instrumenten ausgebildet sein oder aber als Chip oder Karte. In oder am Gehäuse 5 kann jeweils eine Erfassungseinheit 7 vorgesehen sein, die zum drahtlosen Erkennen des Vorhandenseins der einen oder mehreren platzierbaren Spielmarken 6 auf der entsprechenden Satelliteneinheit 3 dient. Grundsätzlich ist es denkbar, dass die Spielmarken 6 auch von der Haupteinheit 2, über eine entsprechende Erfassungseinheit 7 erkannt werden können.

Bei den Satelliteneinheiten 3 kann die Erfassungseinheit 7 im über die Kommunikationseinheit 4 in Verbindung mit einer Steuereinheit 8 der Haupteinheit 2 stehen. Ein Identifikator der erfassten Spielmarke 6 wird mittels der Erfassungseinheit 7 dann über die Kommunikationsverbindung - also mittels der Kommunikationseinheit 4 - an die Steuereinheit 8 der Haupteinheit 2 versendet.

Bei der Haupteinheit 2 steht die Erfassungseinheit 4 mit der Steuereinheit 8 direkt in Kommunikationsverbindung, um jeweils den mittels der Erfassungseinheit 7 ausgelesenen, eindeutigen Identifikator der Spielmarke 6 an die Steuereinheit 8 zu übermitteln.

Dabei ist die Steuereinheit 8 der Haupteinheit 2 derart eingerichtet ist, dass auf der Grundlage der Erfassung der einen oder mehreren auf (die Haupteinheit 2 oder) die wenigstens eine Satelliteneinheit 3 platzierten Spielmarken 6 - also des Identifikators - eine Spur aus einer Anzahl indizierter Spuren des digitalen Mediums, wie der Audiodatei auswählbar ist. Das bedeutet, dass die Spur auf der Grundlage einer spezifischen, eindeutigen Rolle (Charakter, Instrument) ausgewählt werden, die jeder platzierbaren Spielmarke 6, also dessen Identifikator zugeordnet ist. Die ausgewählte Spur wird dann z.B. von einer Ausgabeeinheit 9 - wie einen Lautsprecher - die im Gehäuse der Haupteinheit 2 angeordnet und mit der Steuereinheit 8 in Kommunikationsverbindung steht, wiedergegeben. Wird die Spielmarke 6 wieder von der Satelliteneinheit 3 entfernt, so detektiert dies die Erfassungseinheit 7 und stoppt die Wiedergabe der entsprechenden Spur, die dem Identifikator der Spielmarke 6 entspricht.

Zum Laden neuer digitaler Medien kann die Haupteinheit 2 eine Schnittstelle zum z.B. drahtlosen Verbinden des Spielzeugsets 1 mit einem externen Computergerät 10, das einen externen Speicher **11** für digitale Medien enthält, koppelbar sein. Dabei kann die Schnittstelle mit der Steuereinrichtung 8 der Haupteinheit 2 in Verbindung stehen.

Dazu kann die Steuereinheit 8 einen Speicher 12 für das digitale Medium umfassen, wobei der Speicher 12 mit dem externen Speicher **11** in Verbindung bringbar ist, um digitale Medien vom externen Speicher **11** auf den Speicher 12 der Haupteinheit 2 zu laden. So können dann in dem Speicher 12 Daten, also digitale Medien, wie Audiodateien hinterlegt sein, aufgrund derer die Steuereinheit 8 die Ausgabeeinheit 9 zur Wiedergabe der Musik oder der gesprochenen Geschichten ansteuern kann.

### Bezugszeichen

- 1: Spielzeugset
- 2: Haupteinheit
- 3: Satelliteneinheit
- 4: Kommunikationseinheit
- 5: Gehäuse
- 6: Spielmarke
- 7: Erfassungseinheit
- 8: Steuereinheit
- 9: Ausgabeeinheit
- 10: externes Computergerät
- 11: externer Speicher
- 12: Speicher

## Patentansprüche

1. Interaktives Spielzeugset (1) zum Abspielen digitaler Medien, insbesondere zur Wiedergabe einer Audiodatei mit Musik oder einer gesprochenen Geschichte, wobei das Spielzeugset eine Haupteinheit (2) und wenigstens eine, bevorzugt mehrere Satelliteneinheiten (3) umfasst, wobei die Haupteinheit (2) und die wenigstens eine Satelliteneinheit (3) jeweils eine Kommunikationseinheit (4) umfassen, um miteinander in Kommunikationsverbindung zu stehen, wobei zumindest die wenigstens eine Satelliteneinheit (3), und bevorzugt auch die Haupteinheit (2) folgendes umfasst:
a) ein Gehäuse (5), das zur Aufnahme einer oder mehrerer platzierbarer Spielmarken (6) geeignet ist, welche jeweils einen eindeutigen Identifikator enthalten;
b) eine Erfassungseinheit (7) innerhalb des Gehäuses (5) oder am Gehäuse (5), insbesondere zum drahtlosen Erkennen des Vorhandenseins der einen oder mehreren platzierbaren Spielmarken (6);
c) wobei die Erfassungseinheit (7) im Falle der wenigstens einen Satelliteneinheit (3) über die Kommunikationseinheit (4) in Verbindung mit einer Steuereinheit (8) der Haupteinheit (2) steht, und im Falle der Haupteinheit (2) die Erfassungseinheit (4) mit der Steuereinheit (8) der Haupteinheit (2) in Verbindung steht, um jeweils den mittels der Erfassungseinheit (7) auslesbaren, eindeutigen Identifikator der Spielmarke (6) an die Steuereinheit (8) der Haupteinheit (2) zu übermitteln,
wobei die Steuereinheit (8) der Haupteinheit (2) derart eingerichtet ist, dass auf der Grundlage der Erfassung der einen oder mehreren auf die wenigstens eine Satelliteneinheit (3) platzierten Spielmarken (6) eine Spur aus einer Anzahl indizierter Spuren des digitalen Mediums, wie der Audiodatei auswählbar ist, wobei die auf der Grundlage einer spezifischen, eindeutigen Rolle ausgewählt wird, die jeder platzierbaren Spielmarke (6) zugeordnet ist, und
zumindest die Haupteinheit (2), bevorzugt zumindest die wenigstens eine Satelliteneinheit (3) eine Ausgabeeinheit (9), wie einen Lautsprecher zur Ausgabe des digitalen Mediums, wie der Audiodatei und insbesondere der ausgewählten Spur aufweist.

2. Spielzeugset nach Anspruch 1, **dadurch gekennzeichnet, dass** die Haupteinheit (2) eine Schnittstelle zum insbesondere drahtlosen Verbinden des Spielzeugsets (1) mit einem externen Computergerät (10) umfasst, das einen externen Speicher (11) für digitale Medien enthält, wobei die Schnittstelle mit der Steuereinrichtung (8) der Haupteinheit (2) in Verbindung steht oder in eine solche bringbar ist.

3. Spielzeugset nach einem der Ansprüche 1 oder 2, **dadurch gekennzeichnet, dass** die Steuereinheit (8) einen Speicher (12) für das digitale Medium umfasst, wobei der Speicher (12) mit dem externen Speicher (11) in Verbindung bringbar ist, um digitale Medien vom externen Speicher (11) auf den Speicher (12) der Haupteinheit (2) zu laden, wobei bevorzugt in dem Speicher (12) Daten hinterlegt oder hinterlegbar sind, aufgrund derer die Steuereinheit (8) die Ausgabeeinheit (9) zur Wiedergabe der Musik oder einer gesprochenen Geschichten ansteuern kann, wobei in dem Speicher (12) Daten verschiedener Musik oder verschiedener gesprochener Geschichten abgelegt oder ablegbar sind, wobei bevorzugt die Steuereinheit (8) derart eingerichtet ist, dass sie aus den digitalen Medien in ihrem Speicher (11) oder vom externen Speicher (11) neue digitale Medien, wie Audiodateien während des Betriebs des Spielzeugsets, insbesondere beim Platzieren der einen oder mehreren Spielmarken (6) auf die wenigstens eine Satelliteneinheit (3), insbesondere durch Mischen der Spuren von vorhandenen digitalen Medien nach Art eines Sequenzers generiert.

4. Spielzeugset nach einem der Ansprüche 1 bis 3, **dadurch gekennzeichnet, dass** die Steuereinheit (8) derart ausgebildet ist, dass sie die Ausgabe einer Spur einleitet, wenn die Erfassungseinheit (7) das Vorhandensein der einen oder mehreren platzierbaren Spielmarken (6) feststellt, und die Ausgabe unterbricht, wenn die Erfassungseinheit (7) eine Änderung des Vorhandenseins, wie das Fehlen der einen oder mehreren platzierbaren Spielmarken (6) feststellt.

5. Spielzeugset nach einem der Ansprüche 1 bis 4, **dadurch gekennzeichnet, dass** die Spielmarken (6) als Bedienelemente vorgesehen sind, um bei der Wiedergabe des digitalen Mediums, einer Musik oder einer gesprochenen Geschichte aufgrund von Daten eines Datensatzes mit getrennt auslesbaren Datenfolgen von einem ersten Kapitel zu einem nächsten Kapitel zu springen.

6. Spielzeugset nach einem der Ansprüche 1 bis 5, **dadurch gekennzeichnet, dass** die Kommunikationseinheit (4) zur wechselseitigen, insbesondere drahtlosen Kommunikation der wenigstens einen Satelliteneinheit (3) mit der Haupteinheit (2) eingerichtet ist.

7. Spielzeugset nach einem der Ansprüche 1 bis 6, **dadurch gekennzeichnet, dass** die Erfassungseinheit (7) einen Sensor umfasst, wobei der Sensor ein passiver RFID-Transponder oder ein aktiver RFID-Transponder ist, wobei bevorzugt die Erfassungseinheit (7) wenigstens eine Anzeige, wie eine LED umfasst, um das Platzieren und Wegnehmen der wenigstens einen Spielmarke (6) zu visualisieren.

8. Spielzeugset nach einem der Ansprüche 1 bis 7, **dadurch gekennzeichnet, dass** die wenigstens eine Spielmarke (6) ein passiver RFID-Transponder oder ein aktiver RFID-Transponder ist.

9. Spielzeugset nach einem der Ansprüche 3 bis 8, **dadurch gekennzeichnet, dass** die Ausgabeeinheit (9) mit dem Speicher (12) in Kommunikationsverbindung steht.

10. Spielzeugset nach einem der Ansprüche 1 bis 9, **dadurch gekennzeichnet, dass** die Steuereinheit (8) derart ausgebildet ist, dass sie die Art der Ausgabe, wie die Tonlage, die Tonart, den Rhythmus oder den Takt einer Spur ändert, wenn die Erfassungseinheit (7) das Vorhandensein der einen oder mehreren platzierbaren Spielmarken (6) feststellt, und zwar bevorzugt in Abhängigkeit einer spezifischen, eindeutigen Rolle ausgewählt wird, die jeder platzierbaren Spielmarke (6) zugeordnet ist.

11. Verfahren zum Betreiben eines interaktiven Spielzeugsets (1) zum Abspielen digitaler Medien, insbesondere zur Wiedergabe einer Audiodatei mit Musik oder einer gesprochenen Geschichte, insbesondere zum Betreiben eines interaktiven Spielzeugsets (1) nach einem der Ansprüche 1 bis 10, wobei das Spielzeugset (1) eine Haupteinheit (2) und wenigstens eine Satelliteneinheit (3) umfasst, die in Kommunikationsverbindung miteinander stehen, wobei das Verfahren die folgenden Schritte umfasst:
a) Erkennen des Vorhandenseins eines oder mehrerer auf der wenigstens einen Satelliteneinheit (3) platzierbarer Spielmarken, wobei jeder Spielmarke (6) eine Spur des digitalen Mediums, wie der Audiodatei zugeordnet ist;
b) Auswählen einer bestimmten Spur auf der Grundlage eines eindeutigen Identifikators der platzierbaren Spielmarke (6);
c) Wiedergeben der dem eindeutigen Identifikator zugeordneten Spur mittels einer Ausgabeeinheit (9) der Haupteinheit (2), wobei bevorzugt bei Übereinstimmung der Spielemarke mit der diesem zugeordneten Spur die Ausgabeeinheit (9) einen Quittierton oder ein sonstiges Quittiersignal, insbesondere ein optisches, haptisches oder Kombinationen davon ausgibt.

12. Verfahren nach Anspruch **11, dadurch gekennzeichnet, dass** die Art der Ausgabe, wie die Tonlage, die Tonart, den Rhythmus oder den Takt beim Wiedergeben der dem eindeutigen Identifikator zugeordneten Spur geändert wird, wenn das Vorhandensein der einen oder mehreren platzierbaren Spielmarken (6) festgestellt wird, und zwar bevorzugt in Abhängigkeit einer spezifischen, eindeutigen Rolle, die der platzierbaren Spielmarke (6) zugeordnet ist.

13. Verfahren nach Anspruch **11** oder 12, **dadurch gekennzeichnet, dass** aus den digitalen Medien neue digitale Medien, wie Audiodateien während des Betriebs des Spielzeugsets (1), insbesondere beim Platzieren der einen oder mehreren Spielmarken (6) auf die wenigstens eine Satelliteneinheit (3), insbesondere durch Mischen der Spuren von vorhandenen und/oder von generierten digitalen Medien nach Art eines Sequenzers generiert werden, wobei bevorzugt wenn das digitale Medium mehrere Spuren aufweist, die den Rollen unterschiedlicher Spielmarken in einer vorbestimmten oder generierten Reihenfolge entsprechen, so wird die Wiedergabe des digitalen Mediums nach dem Ende der Wiedergabe einer bestimmten Spur und/oder die Generierung einer Spur gestoppt, wohingegen die weitere Wiedergabe des digitalen Mediums ab dieser Stelle erst fortgesetzt wird, sobald eine Spielmarke auf die Erfassungseinheit (7) aufgelegt wird, die der Rolle der auf diese eben wiedergegebene Spur folgende Spur entspricht.

14. Verfahren nach Anspruch 13, **dadurch gekennzeichnet, dass** das Generieren der Spuren nach dem Zufallsprinzip erfolgt, wenn das Vorhandensein der einen oder mehreren platzierbaren Spielmarken (6), insbesondere einer die Rolle des Zufallsgenerators des Sequenzers aufweisenden Spielmarke (6) festgestellt wird, wobei bevorzugt das Mischen vorhandener und/oder dynamisch erzeugter Spuren nach dem Zufallsprinzip erfolgt, wenn das Vorhandensein der einen oder mehreren platzierbaren Spielmarken (6), insbesondere einer die Rolle des Zufallsgenerators des Sequenzers aufweisenden Spielmarke (6) festgestellt wird.

15. Verwendung eines interaktiven Spielzeugsets (1) nach einem der Ansprüche 1 bis 10 als Sequenzer, wobei bevorzugt das interaktive Spielzeugset (1) derart eingerichtet ist, dass es ein Verfahren nach einem der Ansprüche **11** bis **14** ausführt.

## Claims

1. Interactive toy set (1) for playing digital media, in particular for reproducing an audio file with music or a spoken story, wherein the toy set comprises a main unit (2) and at least one, preferably several satellite units (3), wherein the main unit (2) and the at least one satellite unit (3) each comprise a communication unit (4) in order to be in communication connection with one another, wherein at least the at least one satellite unit (3), and preferably also the main unit (2), comprises the following:
a) a housing (5) which is suitable for receiving one or more placeable game tokens (6), each containing a unique identifier;
b) a detection unit (7) within the housing (5) or on the housing (5), in particular for wirelessly detecting the presence of the one or more placeable game tokens (6);
c) wherein the detection unit (7), in the case of the at least one satellite unit (3), is connected via the communication unit (4) to a control unit (8) of the main unit (2), and in the case of the main unit (2), the detection unit (7) is connected to the control unit (8) of the main unit (2), in order to transmit the unique identifier of the game token (6), readable by means of the detection unit (7), to the control unit (8) of the main unit (2),
wherein the control unit (8) of the main unit (2) is configured such that, on the basis of the detection of the one or more game tokens (6) placed on the at least one satellite unit (3), a track from a number of indexed tracks of the digital medium, such as the audio file, is selectable, wherein the selection is made on the basis of a specific unique role assigned to each placeable game token (6), and
wherein at least the main unit (2), preferably at least the at least one satellite unit (3), comprises an output unit (9), such as a loudspeaker, for outputting the digital medium, such as the audio file, and in particular the selected track.

2. Toy set according to claim 1, **characterized in that** the main unit (2) comprises an interface for in particular wirelessly connecting the toy set (1) to an external computer device (10) which contains an external memory (11) for digital media, wherein the interface is connected to or connectable to the control unit (8) of the main unit (2).

3. Toy set according to one of claims 1 or 2, **characterized in that** the control unit (8) comprises a memory (12) for the digital medium, wherein the memory (12) is connectable to the external memory (11) in order to load digital media from the external memory (11) into the memory (12) of the main unit (2), wherein preferably data are stored or storable in the memory (12) on the basis of which the control unit (8) can control the output unit (9) for reproducing the music or a spoken story, wherein data of different music or different spoken stories are stored or storable in the memory (12), wherein preferably the control unit (8) is configured such that it generates new digital media, such as audio files, during operation of the toy set, in particular when placing the one or more game tokens (6) on the at least one satellite unit (3), in particular by mixing the tracks of existing digital media in the manner of a sequencer.

4. Toy set according to one of claims 1 to 3, **characterized in that** the control unit (8) is designed to initiate the output of a track when the detection unit (7) detects the presence of the one or more placeable game tokens (6), and to interrupt the output when the detection unit (7) detects a change in presence, such as the absence of the one or more placeable game tokens (6).

5. Toy set according to one of claims 1 to 4, **characterized in that** the game tokens (6) are provided as operating elements in order, during reproduction of the digital medium, music or a spoken story, on the basis of data of a data record with separately readable data sequences, to jump from a first chapter to a next chapter.

6. Toy set according to one of claims 1 to 5, **characterized in that** the communication unit (4) is configured for mutual, in particular wireless communication of the at least one satellite unit (3) with the main unit (2).

7. Toy set according to one of claims 1 to 6, **characterized in that** the detection unit (7) comprises a sensor, wherein the sensor is a passive RFID transponder or an active RFID transponder, wherein preferably the detection unit (7) comprises at least one display, such as an LED, in order to visualize the placing and removal of the at least one game token (6).

8. Toy set according to one of claims 1 to 7, **characterized in that** the at least one game token (6) is a passive RFID transponder or an active RFID transponder.

9. Toy set according to one of claims 3 to 8, **characterized in that** the output unit (9) is in communication connection with the memory (12).

10. Toy set according to one of claims 1 to 9, **characterized in that** the control unit (8) is designed to change the type of output, such as the pitch, the key, the rhythm or the beat of a track, when the detection unit (7) detects the presence of the one or more placeable game tokens (6), preferably depending on a specific unique role assigned to each placeable game token (6).

11. Method for operating an interactive toy set (1) for playing digital media, in particular for reproducing an audio file with music or a spoken story, in particular for operating an interactive toy set (1) according to one of claims 1 to 10, wherein the toy set (1) comprises a main unit (2) and at least one satellite unit (3) which are in communication connection with one another, wherein the method comprises the following steps:
a) detecting the presence of one or more placeable game tokens on the at least one satellite unit (3), wherein a track of the digital medium, such as the audio file, is assigned to each game token (6);
b) selecting a specific track on the basis of a unique identifier of the placeable game token (6);
c) reproducing the track assigned to the unique identifier by means of an output unit (9) of the main unit (2), wherein preferably, upon correspondence of the game token with the track assigned thereto, the output unit (9) outputs an acknowledgement tone or another acknowledgement signal, in particular an optical, haptic or combinations thereof.

12. Method according to claim **11, characterized in that** the type of output, such as the pitch, the key, the rhythm or the beat, is changed during reproduction of the track assigned to the unique identifier when the presence of the one or more placeable game tokens (6) is detected, preferably depending on a specific unique role assigned to the placeable game token (6).

13. Method according to claim **11** or 12, **characterized in that** new digital media, such as audio files, are generated from the digital media during operation of the toy set (1), in particular when placing the one or more game tokens (6) on the at least one satellite unit (3), in particular by mixing the tracks of existing and/or generated digital media in the manner of a sequencer, wherein preferably, if the digital medium comprises multiple tracks corresponding to the roles of different game tokens in a predetermined or generated order, reproduction of the digital medium is stopped after the end of reproduction of a specific track and/or the generation of a track, whereas further reproduction of the digital medium from that point is only continued once a game token is placed on the detection unit (7) corresponding to the role of the track following the track just reproduced.

14. Method according to claim 13, **characterized in that** the generation of the tracks takes place randomly when the presence of the one or more placeable game tokens (6), in particular a game token (6) having the role of the random generator of the sequencer, is detected, wherein preferably the mixing of existing and/or dynamically generated tracks takes place randomly when the presence of the one or more placeable game tokens (6), in particular a game token (6) having the role of the random generator of the sequencer, is detected.

15. Use of an interactive toy set (1) according to one of claims 1 to 10 as a sequencer, wherein preferably the interactive toy set (1) is configured to carry out a method according to one of claims **11** to 14.

## Revendications

1. Ensemble de jouet interactif (1) destiné à la lecture de médias numériques, notamment à la reproduction d'un fichier audio comportant de la musique ou une histoire parlée, l'ensemble de jouet comprenant une unité principale (2) et au moins une unité satellite (3), de préférence plusieurs unités satellites (3), l'unité principale (2) et l'au moins une unité satellite (3) comprenant chacune une unité de communication (4) afin d'être en connexion de communication l'une avec l'autre, au moins l'au moins une unité satellite (3), et de préférence également l'unité principale (2), comprenant les éléments suivants :
a) un boîtier (5) apte à recevoir un ou plusieurs jetons de jeu (6) plaçables, chacun contenant un identifiant unique ;
b) une unité de détection (7) à l'intérieur du boîtier (5) ou sur le boîtier (5), notamment pour détecter sans fil la présence du ou des jetons de jeu (6) plaçables ;
c) l'unité de détection (7), dans le cas de l'au moins une unité satellite (3), étant reliée par l'intermédiaire de l'unité de communication (4) à une unité de commande (8) de l'unité principale (2), et dans le cas de l'unité principale (2), l'unité de détection (7) étant reliée à l'unité de commande (8) de l'unité principale (2), afin de transmettre à l'unité de commande (8) de l'unité principale (2) l'identifiant unique du jeton de jeu (6) lisible au moyen de l'unité de détection (7),
l'unité de commande (8) de l'unité principale (2) étant configurée de telle sorte que, sur la base de la détection du ou des jetons de jeu (6) placés sur l'au moins une unité satellite (3), une piste parmi un nombre de pistes indexées du média numérique, tel que le fichier audio, soit sélectionnable, la sélection étant effectuée sur la base d'un rôle unique spécifique attribué à chaque jeton de jeu (6) plaçable,
et au moins l'unité principale (2), de préférence au moins l'au moins une unité satellite (3), comprenant une unité de sortie (9), telle qu'un haut-parleur, pour la sortie du média numérique, tel que le fichier audio, et notamment de la piste sélectionnée.

2. Ensemble de jouet selon la revendication 1, **caractérisé en ce que** l'unité principale (2) comprend une interface destinée notamment à connecter sans fil l'ensemble de jouet (1) à un dispositif informatique externe (10) comprenant une mémoire externe (11) pour des médias numériques, l'interface étant reliée ou pouvant être reliée à l'unité de commande (8) de l'unité principale (2).

3. Ensemble de jouet selon l'une des revendications 1 ou 2, **caractérisé en ce que** l'unité de commande (8) comprend une mémoire (12) pour le média numérique, la mémoire (12) pouvant être reliée à la mémoire externe (11) afin de charger des médias numériques depuis la mémoire externe (11) dans la mémoire (12) de l'unité principale (2), des données étant de préférence stockées ou pouvant être stockées dans la mémoire (12) sur la base desquelles l'unité de commande (8) peut commander l'unité de sortie (9) pour la reproduction de la musique ou d'une histoire parlée, des données de différentes musiques ou de différentes histoires parlées étant stockées ou pouvant être stockées dans la mémoire (12), l'unité de commande (8) étant de préférence configurée de telle sorte qu'elle génère de nouveaux médias numériques, tels que des fichiers audio, pendant le fonctionnement de l'ensemble de jouet, notamment lors du placement du ou des jetons de jeu (6) sur l'au moins une unité satellite (3), notamment par mélange des pistes de médias numériques existants à la manière d'un séquenceur.

4. Ensemble de jouet selon l'une des revendications 1 à 3, **caractérisé en ce que** l'unité de commande (8) est conçue pour initier la sortie d'une piste lorsque l'unité de détection (7) détecte la présence du ou des jetons de jeu (6) plaçables, et pour interrompre la sortie lorsque l'unité de détection (7) détecte une modification de la présence, telle que l'absence du ou des jetons de jeu (6) plaçables.

5. Ensemble de jouet selon l'une des revendications 1 à 4, **caractérisé en ce que** les jetons de jeu (6) sont prévus comme éléments de commande afin, lors de la reproduction du média numérique, d'une musique ou d'une histoire parlée, sur la base de données d'un enregistrement de données comportant des séquences de données lisibles séparément, de passer d'un premier chapitre à un chapitre suivant.

6. Ensemble de jouet selon l'une des revendications 1 à 5, **caractérisé en ce que** l'unité de communication (4) est configurée pour une communication mutuelle, notamment sans fil, de l'au moins une unité satellite (3) avec l'unité principale (2).

7. Ensemble de jouet selon l'une des revendications 1 à 6, **caractérisé en ce que** l'unité de détection (7) comprend un capteur, le capteur étant un transpondeur RFID passif ou un transpondeur RFID actif, l'unité de détection (7) comprenant de préférence au moins un affichage, tel qu'une LED, afin de visualiser le placement et le retrait de l'au moins un jeton de jeu (6).

8. Ensemble de jouet selon l'une des revendications 1 à 7, **caractérisé en ce que** l'au moins un jeton de jeu (6) est un transpondeur RFID passif ou un transpondeur RFID actif.

9. Ensemble de jouet selon l'une des revendications 3 à 8, **caractérisé en ce que** l'unité de sortie (9) est en connexion de communication avec la mémoire (12).

10. Ensemble de jouet selon l'une des revendications 1 à 9, **caractérisé en ce que** l'unité de commande (8) est conçue pour modifier le type de sortie, tel que la hauteur, la tonalité, le rythme ou la mesure d'une piste, lorsque l'unité de détection (7) détecte la présence du ou des jetons de jeu (6) plaçables, de préférence en fonction d'un rôle unique spécifique attribué à chaque jeton de jeu (6) plaçable.

11. Procédé pour faire fonctionner un ensemble de jouet interactif (1) destiné à la lecture de médias numériques, notamment à la reproduction d'un fichier audio comportant de la musique ou une histoire parlée, notamment pour faire fonctionner un ensemble de jouet interactif (1) selon l'une des revendications 1 à 10, l'ensemble de jouet (1) comprenant une unité principale (2) et au moins une unité satellite (3) qui sont en connexion de communication l'une avec l'autre, le procédé comprenant les étapes suivantes :
a) détection de la présence d'un ou de plusieurs jetons de jeu (6) plaçables sur l'au moins une unité satellite (3), une piste du média numérique, tel que le fichier audio, étant attribuée à chaque jeton de jeu (6) ;
b) sélection d'une piste déterminée sur la base d'un identifiant unique du jeton de jeu (6) plaçable ;
c) reproduction de la piste attribuée à l'identifiant unique au moyen d'une unité de sortie (9) de l'unité principale (2), l'unité de sortie (9) émettant de préférence, en cas de correspondance du jeton de jeu avec la piste qui lui est attribuée, un signal d'acquittement sonore ou un autre signal d'acquittement, notamment un signal optique, haptique ou des combinaisons de ceux-ci.

12. Procédé selon la revendication **11, caractérisé en ce que** le type de sortie, tel que la hauteur, la tonalité, le rythme ou la mesure, est modifié lors de la reproduction de la piste attribuée à l'identifiant unique lorsque la présence du ou des jetons de jeu (6) plaçables est détectée, de préférence en fonction d'un rôle unique spécifique attribué au jeton de jeu (6) plaçable.

13. Procédé selon la revendication **11** ou 12, **caractérisé en ce que** de nouveaux médias numériques, tels que des fichiers audio, sont générés à partir des médias numériques pendant le fonctionnement de l'ensemble de jouet (1), notamment lors du placement du ou des jetons de jeu (6) sur l'au moins une unité satellite (3), notamment par mélange des pistes de médias numériques existants et/ou générés à la manière d'un séquenceur, lorsque le média numérique comporte plusieurs pistes correspondant aux rôles de différents jetons de jeu dans un ordre prédéterminé ou généré, la reproduction du média numérique étant arrêtée après la fin de la reproduction d'une piste déterminée et/ou la génération d'une piste, la poursuite de la reproduction du média numérique à partir de cet endroit n'étant reprise que lorsqu'un jeton de jeu est placé sur l'unité de détection (7) correspondant au rôle de la piste suivant celle qui vient d'être reproduite.

14. Procédé selon la revendication 13, **caractérisé en ce que** la génération des pistes s'effectue de manière aléatoire lorsque la présence du ou des jetons de jeu (6) plaçables, notamment d'un jeton de jeu (6) ayant le rôle de générateur aléatoire du séquenceur, est détectée, le mélange de pistes existantes et/ou générées dynamiquement s'effectuant de préférence de manière aléatoire lorsque la présence du ou des jetons de jeu (6) plaçables, notamment d'un jeton de jeu (6) ayant le rôle de générateur aléatoire du séquenceur, est détectée.

15. Utilisation d'un ensemble de jouet interactif (1) selon l'une des revendications 1 à 10 en tant que séquenceur, l'ensemble de jouet interactif (1) étant de préférence configuré pour exécuter un procédé selon l'une des revendications **11** à 14.
